# EUROPEAN PATENT APPLICATION

(11) **EP 3 171 252 A1**
(43) Date of publication of application: **24.05.2017**
(21) Application number: 16175827.1
(22) Date of filing: 22.06.2016
(51) Int. Cl.: G06F 3/038, G06F 3/0346

(54) **TERMINAL DEVICE AND METHOD AND DEVICE FOR OPTIMIZING AIR MOUSE REMOTE CONTROLLER**

(30) Priority: 20.11.2015 CN 201510809888
(71) Applicant: Xiaomi Inc., Beijing 100085 (CN)
(72) Inventor: Liang, Xin, Haidian District, Beijing 100085 (CN); Tan, Kangxi, Haidian District, Beijing 100085 (CN)
(74) Representative: Kudlek, Franz Thomas

(57) **Abstract**

The present disclosure relates to a method and a device for optimizing an air mouse remote controller, and a terminal device. The optimization method includes: receiving (S101, 202, 302) operation instructions sent by the air mouse remote controller at a first time point; acquiring (S102) a first control selected by the air mouse remote controller on an operation interface at a second time point; wherein the second time point is earlier than the first time point, and a time difference between the first time point and the second time point is a preset length of time; and performing (S103, 205, 304) an operation corresponding to the first control.

## Description

### TECHNICAL FIELD

The present disclosure relates to field of computer technology, and more particularly, to a method and a device for optimizing an air mouse remote controller and a terminal device.

### BACKGROUND

With the development of smart home industries, applications of air mouse remote controllers become more and more popular, and the air mouse remote controllers are gradually replacing original remote controllers to control terminal devices, such as a smart television. Ordinary air mouse remote controllers adopt a method that a motion sensor identifies motion trajectories, and simulates mapping operations between a mouse and a cursor on a screen of the terminal device, that is, an operation interface on the screen can be controlled by moving the air mouse remote controller, so that a user can select a corresponding operation through the cursor by pressing a key. However, since, during a key operation, users' hand will have a certain displacement, which can be detected by the motion sensor, resulting in a position selected by the cursor mapped on the screen moving too, thereby the accuracy of the key operation is low, and user experience is poor.

### SUMMARY

The present disclosure provides a method and a device for optimizing an air mouse remote controller and a terminal device, and is used to solve problems that when operating the remote controller, the users' hand will have a certain displacement, which can be detected by the motion sensor, resulting in a position selected by the cursor mapped on the screen moving too, thereby the accuracy of the key operation is low, and the user experience is poor.

According to a first aspect of the present disclosure, there is provided a method for optimizing an air mouse remote controller, including:
receiving operation instructions sent by the air mouse remote controller at a first time point;
acquiring a first control selected by the air mouse remote controller on an operation interface at a second time point; wherein the second time point is earlier than the first time point, and a time difference between the first time point and the second time point is a preset length of time; and
performing an operation corresponding to the first control.

In technical solutions provided by the embodiments of the present disclosure, when the operation instructions sent by the user via the air mouse remote controller at the first time point are received, performing no operation to the control on the interface of the terminal device at the first time point, returning to the second time point before the preset length of time, using a control selected at the second time point as the first control to be performed, and performing the operation corresponding to the first control, that is, compensating error displacement during a press operation of the user in terms of time. Thereby the selection error due to that the users' hand moves during the key operation is avoided, and the accuracy of the terminal device controlled by the air mouse remote controller is improved effectively.

Further, before acquiring the first control selected by the air mouse remote controller on the operation interface at the second time point, the method further includes:
receiving and storing coordinates of the air mouse remote controller and a time point corresponding to each coordinate sent by the air mouse remote controller in real time.

Further, the acquiring the first control selected by the air mouse remote controller on the operation interface at the second time point includes:
acquiring a first coordinate of the air mouse remote controller at the second time point; and
acquiring a first position point of a cursor corresponding to the first coordinate according to a preset algorithm, and using a control corresponding to the first position point on the operation interface as the first control.

In technical solutions provided by the embodiments of the present disclosure, there is provided a specific implementation for compensating the error displacement during the press operation by the user in terms of time. The terminal device needs to record and store coordinate information of the position points on the motion trajectories of the air mouse remote controller within a period of time and a time point of moving to each position point, calculate a second time point through the first time point and the preset length of time after receiving the operation instructions, search and acquire coordinates of the air mouse remote controller at the second time point from the stored information, acquire a control selected by the air mouse remote controller at this position according to the preset algorithm and a mapping relationship, and perform an operation corresponding to the control. Thereby selection error due to that the users' hand moves during the key operation is avoided, the accuracy of the operation of the air mouse remote controller is improved effectively; and the inaccurate selection due to unstable hand is reduced, the user experience is improved effectively.

Advantageously, before acquiring the first control selected by the air mouse remote controller on the operation interface at the second time point, the method further includes:
acquiring and storing position points corresponding to motion trajectories of a cursor corresponding to the air mouse remote controller on the operation interface and a time point corresponding to each position point in real time.

Further, the acquiring the first control selected by the air mouse remote controller on the operation interface at the second time point includes:
backing the cursor to a second position point corresponding to the second time point according to the motion trajectories; and using a control corresponding to the second position point on the operation interface as the first control.

In technical solutions provided by the embodiments of the present disclosure, there is provided a specific implementation for compensating the error displacement during the press operation by the user in terms of time. The terminal device needs to record and store coordinate information of the position points on the motion trajectories of the cursor of the air mouse remote controller within a period of time and a time point of moving to each position point, calculate a second time point through the first time point and the preset length of time after receiving the operation instructions, search and acquire a control corresponding to the position point of the cursor at the second time point from the stored information, and perform an operation corresponding to the control. Thereby the selection error due to that the users' hand moves during the key operation is avoided, the accuracy of the operation of the air mouse remote controller is improved effectively; and the inaccurate selection due to unstable hand is reduced, the user experience is improved effectively.

According to a second aspect of the present disclosure, there is provided a device for optimizing an air mouse remote controller, including:
a first receiving module configured to receive operation instructions sent by the air mouse remote controller at a first time point;
an acquisition module configured to acquire a first control selected by the air mouse remote controller on an operation interface at a second time point; wherein the second time point is earlier than the first time point, and a time difference between the first time point and the second time point is a preset length of time; and
a first processing module configured to perform an operation corresponding to the first control.

Further, the device includes:
a second receiving module configured to receive and store coordinates of the air mouse remote controller and a time point corresponding to each coordinate sent by the air mouse remote controller in real time.

Further, the acquisition module includes:
a first acquisition unit configured to acquire a first coordinate of the air mouse remote controller at the second time point; and
a second acquisition unit configured to acquire a first position point of a cursor corresponding to the first coordinate according to a preset algorithm, and use a control corresponding to the first position point on the operation interface as the first control.

Advantageously, the device further includes:
a second processing module configured to acquire and store position points corresponding to motion trajectories of a cursor corresponding to the air mouse remote controller on the operation interface and a time point corresponding to each position point in real time.

Further, the acquisition module includes:
a first processing unit configured to back the cursor to a second position point corresponding to the second time point according to the motion trajectories; and use a control corresponding to the second position point on the operation interface as the first control.

According to a third aspect of the present disclosure, there is provided a terminal device, including: a receiver configured to receive a message, a processor configured to control execution of executable instructions, and a memory configured to store instructions executable by the processor;
wherein the receiver is configured to: receive operation instructions sent by the air mouse remote controller at a first time point; and
the processor is configured to:
acquire a first control selected by the air mouse remote controller on an operation interface at a second time point; wherein the second time point is earlier than the first time point, and a time difference between the first time point and the second time point is a preset length of time; and
perform an operation corresponding to the first control.

According to a fourth aspect of the present disclosure, there is provided a computer program, which when executing on a processor of a device, performs a method according to any one of the above methods according to a first aspect of embodiments of the present disclosure.

The technical solutions provided by the embodiments of the present disclosure may include the following advantageous effects:

The terminal device compensates for the position selected when the operation instructions sent by the air mouse remote controller is received in terms of time. The preset length of time in this solution can be obtained by performing statistical analysis on many times of press operations. Using coordinate information of the air mouse remote controller itself or coordinate information of the cursor corresponding to the air mouse remote controller on the operation interface, the operation instructions at the first time point is received, and the first control selected when backing to the second time point is performed. Thereby the effect on the control selected on the interface due to that the users' hand moves during the key operation is avoided, the accuracy of the operation controlled by the air mouse remote controller is improved, and the user experience is improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention, and together with the description, serve to explain the principles of the invention.
Fig. 1 is a flow chart illustrating a first embodiment of a method for optimizing an air mouse remote controller, according to an exemplary embodiment.
Fig. 2 is a flow chart illustrating a second embodiment of a method for optimizing an air mouse remote controller, according to an exemplary embodiment.
Fig. 3 is a flow chart illustrating a third embodiment of a method for optimizing an air mouse remote controller, according to an exemplary embodiment.
Fig. 4 is a block diagram illustrating a first embodiment of a device for optimizing an air mouse remote controller, according to an exemplary embodiment.
Fig. 5 is a block diagram illustrating a second embodiment of a device for optimizing an air mouse remote controller, according to an exemplary embodiment.
Fig. 6 is a block diagram illustrating a third embodiment of a device for optimizing an air mouse remote controller, according to an exemplary embodiment.
Fig. 7 is a block diagram illustrating a fourth embodiment of a device for optimizing an air mouse remote controller, according to an exemplary embodiment.
Fig. 8 is a block diagram illustrating a fifth embodiment of a device for optimizing an air mouse remote controller, according to an exemplary embodiment.
Fig. 9 is a block diagram illustrating an entity of a terminal device, according to an exemplary embodiment.
Fig. 10 is a block diagram illustrating a terminal device 800, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

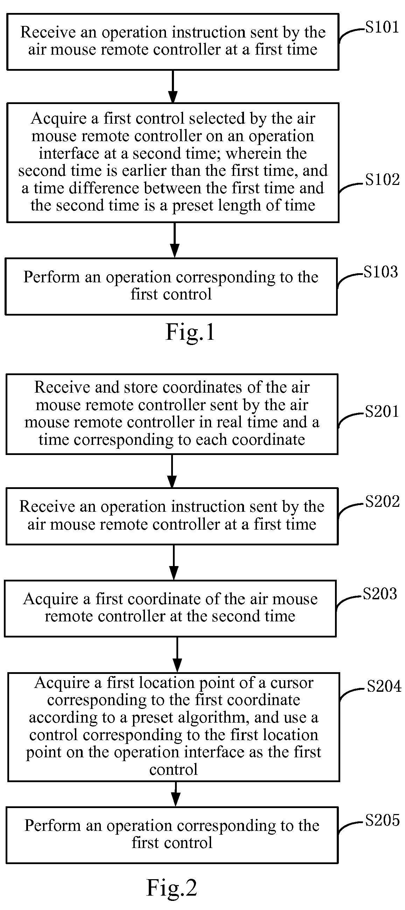

Fig. 1 is a flow chart illustrating a first embodiment of a method for optimizing an air mouse remote controller, according to an exemplary embodiment. As shown in Fig. 1, the method for optimizing the air mouse remote controller is mainly used in a terminal device, the terminal device may be specifically implemented as a commonly-used television, a personal computer, a remote-controlled projector, and the like. By this method, the accuracy of the operation of the air mouse remote controller can be improved. The method for optimizing the air mouse remote controller includes the following steps.

In step S101, operation instructions sent by the air mouse remote controller at a first time point is received.

In the present step, there is no improvement on the air mouse remote controller itself, the terminal device (such as a smart television), which can be controlled and operated by the air mouse remote controller, receives the operation instructions sent by the air mouse remote controller, and acquires a time point when the operation instructions is received, that is, the above first time point. Preferably, the operation instructions can carry a specific time point of sending, and the specific time point can also be acquired over a network when the terminal device receives the operation instructions.

In step S102, a first control selected by the air mouse remote controller on an operation interface at a second time point is acquired; wherein the second time point is earlier than the first time point, and a time difference between the first time point and the second time point is a preset length of time.

In the present step, the second time point herein refers to a time point before the first time point, a specific length of time between the first time point and the second time point is the above preset length of time, which can be obtained using a statistic method to many experiments, that is, statistically calculating the length of time from a time point that the user begins to press the key to a time point that the key is stopped to be pressed, acquiring an average value or a preferred value through data statistics as the preset length of time.

The meaning of this step is that, at the moment of pressing the key of the air mouse remote controller, since the users' hand is hanging in the air, there may be an instantaneous displacement during the operation, the motion sensor in the air mouse remote controller detects the change of the position, which results in that the position of the cursor on the terminal device also changes, and the control originally selected may not be selected after the operation, thereby the problem may be solved by compensating a time for pressing the key, that is, acquiring the first control selected by the cursor at the second time point before the first time point as an operation control need to be selected by the user.

In step S103, an operation corresponding to the first control is performed.

In the method for optimizing the air mouse remote controller provided by the embodiments of the present disclosure, when the operation instructions sent by the user via the air mouse remote controller at the first time point is received, performing no operation to the control on the interface of the terminal device at the first time point, returning to the second time point before the preset length of time, using a control selected at the second time point as the first control to be performed, and performing the operation corresponding to the first control, that is, compensating error displacement during a press operation of the user in terms of time. Thereby the selection error due to that the users' hand moves during the key operation is avoided, and the accuracy of the terminal device controlled by the air mouse remote controller is improved effectively.

Fig. 2 is a flow chart illustrating a second embodiment of a method for optimizing an air mouse remote controller, according to an exemplary embodiment. As shown in Fig. 2, on the basis of the above embodiment shown in Fig. 1, before the step 102, real-time coordinates of the air mouse remote controller and a corresponding time point need to be acquired, the implementation steps of the specific method are as follows.

In step S201, coordinates of the air mouse remote controller and a time point corresponding to each coordinate sent by the air mouse remote controller are received and stored in real time.

In this step, the motion sensor or other devices capable of detecting the position in the air mouse remote controller acquire the coordinates and the time point of the air mouse remote controller in real time according to the movement of the air mouse remote controller, and send them to the terminal device. After receiving the real-time coordinates and the time points of the air mouse remote controller, the terminal device stores these data in a corresponding storage space.

Advantageously, in order to save the storage space of the terminal device, the terminal device can only store data within a period of time, for example, the data within one minute. As time goes by, data within initial seconds of one minute previously acquired can be deleted, so as to ensure that the stored data can be used to obtain the coordinates of the air mouse remote controller and the time point before the preset length of time.

In addition, a time point corresponding to each coordinate of the air mouse remote controller can either be sent by the air mouse remote controller, or can be acquired by the terminal device itself, which is not limited.

In step S202, operation instructions sent by the air mouse remote controller at a first time point is received.

In step S203, a first coordinate of the air mouse remote controller at the second time point is acquired.

In the present step, the terminal device receives the operation instructions, and acquires the coordinate of the air mouse remote controller in a space at the second time point before the first time point, wherein the coordinate can be obtained by detecting with the motion sensor therein.

In step S204, a first position point of a cursor corresponding to the first coordinate is acquired according to a preset algorithm, and a control corresponding to the first position point on the operation interface is used as the first control.

In the present step, a mapping relationship between the air mouse remote controller and the operation interface of the terminal device may be realized through the preset algorithm, for example, displacement algorithm, attitude algorithm, six-axis attitude fusion algorithm having three-axis gyroscope and three-axis accelerator, and the like. The specific used algorithm is not limited, as long as the position of the corresponding cursor on the operation interface of the terminal device can be obtained by the coordinate of the air mouse remote controller. The terminal device acquires the control corresponding to the position point selected by the cursor at the second time point.

In step S205, an operation corresponding to the first control is performed.

In the embodiments of the present disclosure, the operation corresponding to the first control is performed after compensating for time.

In the method for optimizing the air mouse remote controller provided by the embodiments of the present disclosure, there is provided a specific implementation for compensating the error displacement during the press operation by the user in terms of time. The terminal device needs to record and store coordinate information of the position points on the motion trajectories of the air mouse remote controller within a period of time and a time point of moving to each position point, calculate a second time point through the first time point and the preset length of time after receiving the operation instructions, search and acquire coordinates of the air mouse remote controller at the second time point from the stored information, acquire a control selected by the air mouse remote controller at this position according to the preset algorithm and a mapping relationship, and perform an operation corresponding to the control. Thereby the selection error due to that the users' hand moves during the key operation is avoided, the accuracy of the operation of the air mouse remote controller is improved effectively; and the inaccurate selection due to unstable hand is reduced, the user experience is improved effectively.

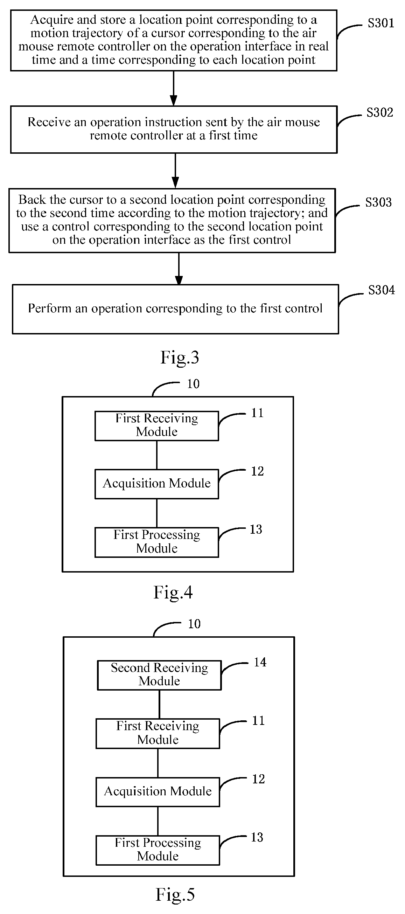

Fig. 3 is a flow chart illustrating a third embodiment of a method for optimizing an air mouse remote controller, according to an exemplary embodiment. As shown in Fig. 3, on the basis of the above embodiment shown in Fig. 1, the present embodiment provides a paratactic method with the embodiment shown in Fig. 2 for achieving compensation of the displacement of the hand through the coordinate and the time point of the cursor, the specific implementation steps include:

In step S301, position points corresponding to motion trajectories of a cursor corresponding to the air mouse remote controller on the operation interface and a time corresponding to each position point are acquired and stored in real time.

In the present step, it is different from the above second embodiment that, the terminal device does not need to store the coordinate information of the air mouse remote controller itself, but acquires the trajectories and the coordinates of the cursor corresponding to the air mouse remote controller on the operation interface and the time point when the cursor moves to each position point according to the above preset algorithm. The same time point may be sent by the air mouse remote controller, and may also be acquired by the terminal device itself.

Advantageously, in order to save the storage space of the terminal device, the terminal device can only store data within a period of time, for example, the data within one minute. As time goes by, data within initial seconds of one minute previously acquired can be deleted, so as to ensure that the stored data can be used to obtain the coordinates of the air mouse remote controller and the time point before the preset length of time.

In step S302, operation instructions sent by the air mouse remote controller at a first time point is received.

In step S303, the cursor is backed to a second position point corresponding to the second time point according to the motion trajectories; and a control corresponding to the second position point on the operation interface is used as the first control.

In the present step, after receiving the operation instructions, the cursor is backed to the second position point at the second time point according to the time point corresponding to the motion trajectories of the cursor, the control at the second position point, which is considered to a control wanted to be selected by the user, is acquired.

In step 304, an operation corresponding to the first control is performed.

For example, a small piece of moving data (such as 10ms) before present time point in a cache is circulated, after identifying the key operation, the air mouse remote controller is pushed back for a period of time (such as 10ms) to compensate displacement generated by pressing the key previously, thereby the accuracy for pressing the key of the air mouse is optimized, and key experience is relatively good. The above preset length of time may be set according to actual needs.

In the method for optimizing the air mouse remote controller provided by the embodiments of the present disclosure, there is provided a specific implementation for compensating the error displacement during the press operation by the user in terms of time. The terminal device needs to record and store coordinate information of the position points on the motion trajectories of the cursor of the air mouse remote controller within a period of time and a time point of moving to each position point, calculate a second time point through the first time point and the preset length of time after receiving the operation instructions, search and acquire a control corresponding to the position point of the cursor at the second time point from the stored information, and perform an operation corresponding to the control. Thereby the selection error due to that the users' hand moves during the key operation is avoided, the accuracy of the operation of the air mouse remote controller is improved effectively; and the inaccurate selection due to unstable hand is reduced, the user experience is improved effectively.

The above solutions realize the compensation for the operation time in different ways, a manner for acquiring the preset length of time is similar to that in the first embodiment, and position change generated during the key operation of the hand is compensated for through the length of time, thus improving the accuracy of the operation. In addition, the above solutions can also be realized by displacement compensation directly, namely, after detecting the operating instructions, the cursor moves back a distance along the original motion trajectories, improving the accuracy of the operation. However, since operation strength and habits for each user are inconsistent, the accuracy using displacement compensation maybe is not as good as that using time compensation.

For any of the above compensations, if, after compensating, the air mouse remote controller just does not select any control, the coordinate information of the position of the cursor on the operation interface of the terminal device can be detected, a control closest to the position acquired according to the coordinates of the cursor and the coordinates of the control, or a control within a certain range of the position, is deemed as the first control in the above solutions, then the operation corresponding to the first control is performed. This solution may also be used to improve the accuracy on mouse operation.

Fig. 4 is a block diagram illustrating a first embodiment of a device for optimizing an air mouse remote controller, according to an exemplary embodiment. Referring to Fig. 4, the device 10 for optimizing the air mouse remote controller includes:
a first receiving module 11 configured to receive operation instructions sent by the air mouse remote controller at a first time point;
an acquisition module 12 configured to acquire a first control selected by the air mouse remote controller on an operation interface at a second time point; wherein the second time point is earlier than the first time point, and a time difference between the first time point and the second time point is a preset length of time; and
a first processing module 13 configured to perform an operation corresponding to the first control.

In the device for optimizing the air mouse remote controller provided by the embodiments of the present disclosure, when the first receiving module receives the operation instructions sent by the user via the air mouse remote controller at the first time point, the control on the interface of the terminal device at the first time point is not performed, the second time point before the preset length of time is acquired through the acquisition module, the first processing module uses a control selected at the second time point as the first control to be performed, and the operation corresponding to the first control is performed, that is, error displacement during a press operation of the user in terms of time is compensated. Thereby selection error due to that the users' hand moves during the key operation is avoided, and the accuracy of the terminal device controlled by the air mouse remote controller is improved effectively.

On the basis of the above embodiment shown in Fig. 4, Fig. 5 is a block diagram illustrating a second embodiment of a device for optimizing an air mouse remote controller, according to an exemplary embodiment. Referring to Fig. 5, the device 10 for optimizing the air mouse remote controller further includes:
a second receiving module 14 configured to receive and store coordinates of the air mouse remote controller and a time point corresponding to each coordinate sent by the air mouse remote controller in real time.

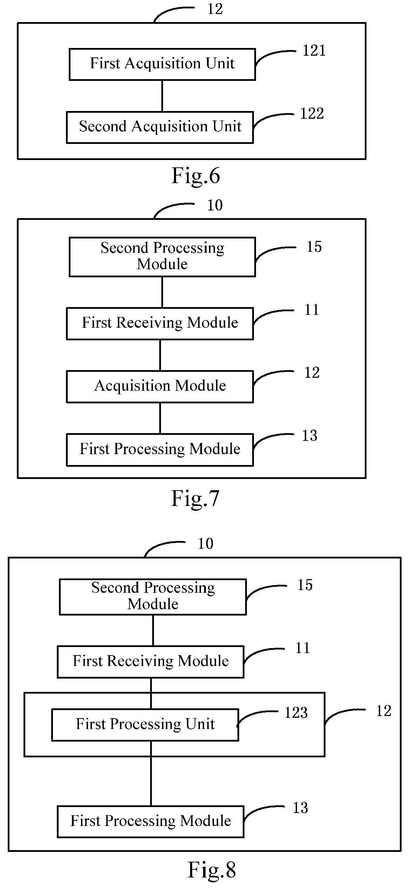

On the basis of the above embodiment shown in Fig. 5, Fig. 6 is a block diagram illustrating a third embodiment of a device for optimizing an air mouse remote controller, according to an exemplary embodiment. Referring to Fig. 6, the acquisition module 12 includes:
a first acquisition unit 121 configured to acquire a first coordinate of the air mouse remote controller at the second time point; and
a second acquisition unit 122 configured to acquire a first position point of a cursor corresponding to the first coordinate according to a preset algorithm, and use a control corresponding to the first position point on the operation interface as the first control.

The device for optimizing the air mouse remote controller provided by the embodiments of the present disclosure needs to record and store coordinate information of the position points on the motion trajectories of the air mouse remote controller within a period of time and a time point of moving to each position point, calculate a second time point through the first time point and the preset length of time after receiving the operation instructions, search and acquire coordinates of the air mouse remote controller at the second time point from the stored information, acquire a control selected by the air mouse remote controller at this position according to the preset algorithm and a mapping relationship, and perform an operation corresponding to the control. Thereby selection error due to that the users' hand moves during the key operation is avoided, and the accuracy of the operation of the air mouse remote controller is improved effectively.

On the basis of the above embodiment shown in Fig. 4, Fig. 7 is a block diagram illustrating a fourth embodiment of a device for optimizing an air mouse remote controller, according to an exemplary embodiment. Referring to Fig. 7, the device 10 for optimizing the air mouse remote controller further includes:
a second processing module 15 configured to acquire and store position points corresponding to motion trajectories of a cursor corresponding to the air mouse remote controller on the operation interface and a time point corresponding to each position point in real time.

On the basis of the above embodiment shown in Fig. 7, Fig. 8 is a block diagram illustrating a fifth embodiment of a device for optimizing an air mouse remote controller, according to an exemplary embodiment. Referring to Fig. 8, the acquisition module 12 includes:
a first processing unit 123 configured to back the cursor to a second position point corresponding to the second time point according to the motion trajectories; and use a control corresponding to the second position point on the operation interface as the first control.

The device for optimizing the air mouse remote controller provided by the embodiments of the present disclosure needs to record and store coordinate information of the position points on the motion trajectories of the cursor of the air mouse remote controller within a period of time and a time point of moving to each position point, calculate a second time point through the first time point and the preset length of time after receiving the operation instructions, search and acquire a control corresponding to the position point of the cursor at the second time point from the stored information, and perform an operation corresponding to the control. Thereby the inaccurate selection due to unstable hand is reduced, the user experience is improved effectively.

With respect to the device for optimizing the air mouse remote controller (corresponding to terminal devices in specific applications) in the above embodiments, the specific manners for performing operations for individual modules therein have been described in detail in the embodiments regarding the methods shown in Fig. 1 to Fig. 3, which will not be elaborated herein.

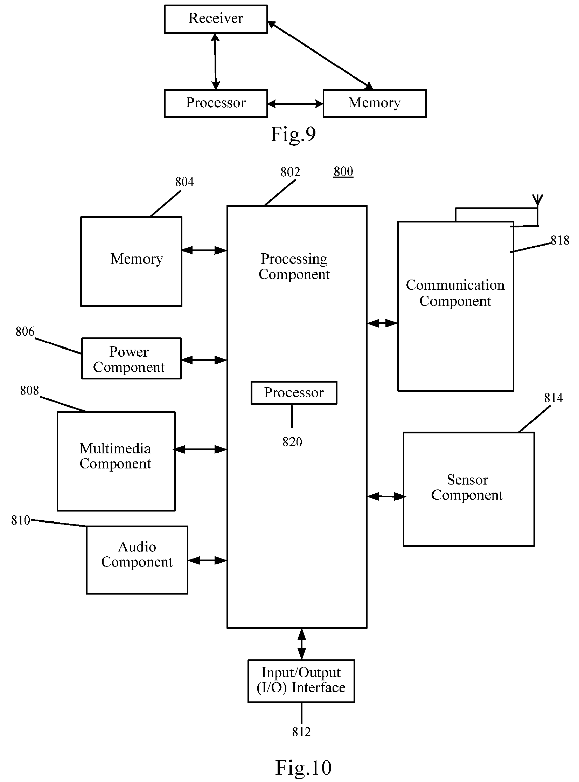

The above embodiments describe the terminal device, namely, the internal function module and structural representation of the device for optimizing the air mouse remote controller. Fig. 9 is a block diagram illustrating an entity of a terminal device, according to an exemplary embodiment. Referring to Fig. 9, the terminal device may be specific implemented as:
a receiver configured to receive a message, a processor configured to control execution of executable instructions, and a memory configured to store instructions executable by the processor;
wherein the receiver is configured to: receive operation instructions sent by the air mouse remote controller at a first time point; and
the processor is configured to:
acquire a first control selected by the air mouse remote controller on an operation interface at a second time point; wherein the second time point is earlier than the first time point, and a time difference between the first time point and the second time point is a preset length of time; and
perform an operation corresponding to the first control.

In the real embodiments of the above terminal device, it should be understood that, the processor may be a Central Processing Unit (abbreviated as CPU), and may also be other general processors, Digital Signal Processors (abbreviated as DSPs), Application Specific Integrated Circuits (abbreviated as ASICs), and the like. The general processor may be a microprocessor, or the processor may also be any conventional processors, and the like. However, the foregoing memory may be a read-only memory (abbreviated as ROM), a random access memory (RAM), a flash memory, a hard disk or a solid state disk. The steps of the method disclosed by the embodiment of the invention can be directly embodied by the execution of the hardware processor, or a combination of the hardware and the software modules in the processor.

Fig. 10 is a block diagram illustrating a terminal device 800, according to an exemplary embodiment. The terminal device may be a device controlled by the air mouse remote controller, such as a smart television, a tablet computer, a computer, a digital broadcast terminal, a messaging device, a tablet device, a medical device, exercise equipment, a smart home device, and smart household appliance.

Referring to Fig. 10, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method for optimizing an air mouse remote controller, the specific steps is as follows:
receiving operation instructions sent by the air mouse remote controller at a first time point;
acquiring a first control selected by the air mouse remote controller on an operation interface at a second time point; wherein the second time point is earlier than the first time point, and a time difference between the first time point and the second time point is a preset length of time; and
performing an operation corresponding to the first control.

In exemplary embodiments, there is also provided a non-transitory computer-readable storage medium including instructions, such as included in the memory 804, executable by the processor 820 in the terminal device 800, for performing the above methods. For example, the non-transitory computer-readable storage medium may be a ROM, a RAM, a CD-ROM, a magnetic tape, a floppy disc, an optical data storage device, and the like.

## Claims

1. A method for optimizing an air mouse remote controller, comprising:
receiving (S101, 202, 302) operation instructions sent by the air mouse remote controller at a first time point;
acquiring (S102) a first control selected by the air mouse remote controller on an operation interface at a second time point; wherein the second time point is earlier than the first time point, and a time difference between the first time point and the second time point is a preset length of time; and
performing (S103, 205, 304) an operation corresponding to the first control.

2. The method according to claim 1, wherein before acquiring (S102) the first control selected by the air mouse remote controller on the operation interface at the second time point, the method further comprises:
receiving and storing (S201) coordinates of the air mouse remote controller and a time point corresponding to each coordinate sent by the air mouse remote controller in real time.

3. The method according to claim 2, wherein acquiring (S102) the first control selected by the air mouse remote controller on the operation interface at the second time point comprises:
acquiring (S203) a first coordinate of the air mouse remote controller at the second time point; and
acquiring (S204) a first position point of a cursor corresponding to the first coordinate according to a preset algorithm, and using (S204) a control corresponding to the first position point on the operation interface as the first control.

4. The method according to any one of the preceding claims, wherein before acquiring (S102) the first control selected by the air mouse remote controller on the operation interface at the second time point, the method further comprises:
acquiring and storing (S301) position points corresponding to motion trajectories of a cursor corresponding to the air mouse remote controller on the operation interface and a time point corresponding to each position point in real time.

5. The method according to claim 4, wherein acquiring (S102) the first control selected by the air mouse remote controller on the operation interface at the second time point comprises:
backing (S303) the cursor to a second position point corresponding to the second time point according to the motion trajectories; and using (S303) a control corresponding to the second position point on the operation interface as the first control.

6. A device for optimizing an air mouse remote controller, comprising:
a first receiving module (11) configured to receive operation instructions sent by the air mouse remote controller at a first time point;
an acquisition module (12) configured to acquire a first control selected by the air mouse remote controller on an operation interface at a second time point; wherein the second time point is earlier than the first time point, and a time difference between the first time point and the second time point is a preset length of time; and
a first processing module (13) configured to perform an operation corresponding to the first control.

7. The device according to claim 6, further comprising:
a second receiving module (14) configured to receive and store coordinates of the air mouse remote controller and a time point corresponding to each coordinate sent by the air mouse remote controller in real time.

8. The device according to claim 7, the acquisition module (12) comprising:
a first acquisition unit (121) configured to acquire a first coordinate of the air mouse remote controller at the second time point; and
a second acquisition unit (122) configured to acquire a first position point of a cursor corresponding to the first coordinate according to a preset algorithm, and use a control corresponding to the first position point on the operation interface as the first control.

9. The device according to any one of the claims 6 to 8, further comprising:
a second processing module (15) configured to acquire and store position points corresponding to motion trajectories of a cursor corresponding to the air mouse remote controller on the operation interface and a time point corresponding to each position point in real time.

10. The device according to claim 9, the acquisition module (12) comprising:
a first processing unit (123) configured to back the cursor to a second position point corresponding to the second time point according to the motion trajectories; and use a control corresponding to the second position point on the operation interface as the first control.

11. A terminal device, comprising: a receiver configured to receive a message, a processor (820) configured to control execution of executable instructions, and a memory (804) configured to store instructions executable by the processor (820);
wherein the receiver is configured to: receive operation instructions sent by the air mouse remote controller at a first time point; and
the processor (820) is configured to perform a method according to any one of claims 1-5.

12. A computer program, which when executing on a processor (820) of a device, performs a method according to any one of claims 1-5.

13. A Computer readable storage medium comprising a computer program according to claim 12.
